# EUROPÄISCHE PATENTSCHRIFT

(11) **EP 2 719 932 B1**
(45) Veröffentlichungstag und Bekanntmachung des Hinweises auf die Patenterteilung: **04.01.2017**
(21) Anmeldenummer: 13188512.1
(22) Anmeldetag: 14.10.2013
(51) Int. Cl.: F16K 17/16, F16K 31/50, F16K 35/06, F16K 7/12, F16K 7/16

(54) **Steigendes Handventil mit Hubbegrenzung**
Lifting manual valve with limited stroke
Soupape manuelle montante avec limitation de la course

(30) Priorität: 12.10.2012 DE 102012109756
(43) Veröffentlichungstag der Anmeldung: 16.04.2014
(73) Patentinhaber: SED Flow Control GmbH, 74906 Bad Rappenau (DE)
(72) Erfinder: Ehmig, Uwe, 74177 Bad Friedrichshall (DE); Mall, Valentin, 74831 Gundelsheim-Obergriesheim (DE); Rutsch, Uwe, 75670 Forchtenberg-Sindringen (DE)
(74) Vertreter: von Hirschhausen, Helge

(56) Entgegenhaltungen:
- EP-A1- 0 387 634
- FR-A- 1 103 790
- FR-A- 1 482 169
- FR-A1- 2 228 996
- US-A- 3 347 270
- US-A- 3 565 089

## Beschreibung

Die vorliegende Erfindung betrifft ein Handventil mit einem Ventilhauptkörper und einer darin zumindest in einer Betätigungsrichtung beweglich angeordneten Spindel, die zur Betätigung des Handventils mittels eines an der Spindel angeordneten Handrades in seiner Lage relativ zum Ventilhauptkörper zusammen mit dem Handrad verstellt werden kann, wobei das Handventil eine Hubbegrenzung für die Spindel mit einem Anschlagselement aufweist, das in seiner Lage in Bezug auf den Ventilhauptkörper einstellbar ist.

Derartige Handventile werden auch als steigende Handventile bezeichnet. Bei steigenden Handventilen wird das Ventil durch Drehen des Handrads geöffnet bzw. geschlossen, wobei sich das Handrad gemeinsam mit der Spindel in Betätigungsrichtung entweder vom Ventilhauptkörper weg- oder zum Ventilhauptkörper hinbewegt. Die Betätigungsrichtung erstreckt sich also in Längsrichtung der Spindel. Im Gegensatz hierzu bewegt sich bei einem nicht-steigenden Handrad lediglich die Spindel, wobei das Handrad sich nicht vom Ventihauptlkörper hin- oder wegbewegt.

Für viele Einsatzgebiete ist es zweckmäßig, derartige Handventile mit einer Hubbegrenzung auszustatten. Hierbei kann die maximale Öffnung des Handventils eingestellt werden, indem die Bewegung der Spindel entlang der Betätigungsrichtung bei einer öffnenden Bewegung begrenzt wird. In der Regel wird hierfür ein Anschlagselement verwendet, an welchem die Spindel oder ein anderes sich mit der Spindel bewegendes Teil anschlägt. Um den Hub zu begrenzen kann die Lage des Anschlagselements relativ zum Ventilhauptkörper eingestellt werden. Soll der Hub stärker begrenzt werden, wird der Abstand zwischen Anschlagselement und Ventilhauptkörper verringert. Entsprechend wird bei einem größeren Maximalhub der Abstand zwischen Ventilhauptkörper und Anschlagselement vergrößert.

Bei nicht-steigenden Handventilen kann das Anschlagselement direkt am Handrad angeordnet werden, da das Handrad sich nicht mit der Spindel beim Betätigen bewegt und somit der Abstand zwischen Anschlagselement und Ventilhauptkörper konstant bleibt. Eine derartige Hubbegrenzung für ein nichtsteigendes Handrad ist beispielsweise in der EP 1 257 755 B1 gezeigt.

Nicht-steigende Handventile dieser Art sind aus den Druckschriften EP 087634, FR1103790, US 3347270 und FR 1482169 bekannt.

Bei steigenden Handventilen ergibt sich aber das Problem, dass sich das Handrad mit der Spindel gemeinsam bewegt. Somit muss bei einer integrierten Hubbegrenzung das Anschlagselement zum Einstellen des Maximalhubs entweder direkt am Ventilhauptkörper angeordnet sein, oder der Ventilhauptkörper einen festen Anschlag für ein an der Spindel angeordnetes Anschlagselement aufweisen. Um das Anschlagselement schnell und einfach in seiner Lage verändern zu können, ergibt sich somit ein vergleichsweise großes Handventil, da das Anschlagselement zur Lagejustierung gut zugänglich sein muss, insbesondere dann, wenn ein Werkzeug zur Einstellung zu verwenden ist. Letzteres ist beispielsweise dann der Fall, wenn die Hubbegrenzung über eine Sechskantmutter bzw. -schraube oder dergleichen erfolgt.

Steigende Handventile dieser Art sind aus den Druckschriften US 3565089 und FR 2228996 bekannt.

Ist jedoch ein kompakter Aufbau gewünscht, wird die Zugänglichkeit zum Anschlagselement eingeschränkt, wodurch die Hubbegrenzung nur unter großem Aufwand mit Spezialwerkzeug oder gar durch zumindest teilweise Demontage des Handventils einstellbar ist. Somit ist es Aufgabe der vorliegenden Erfindung ein kompaktes steigendes Handventil mit einer integrierten Hubbegrenzung aufzuzeigen, bei welchem der Maximalhub der Spindel schnell und einfach ohne großen Aufwand eingestellt werden kann.

Die Lösung der Aufgabe gelingt mit einem Handventil gemäß Anspruch 1. Vorteilhafte Weiterbildungen sind in den Unteransprüchen beschrieben.

Die vorliegende Erfindung zeichnet sich gegenüber den bekannten Handventilen dadurch aus, dass die Hubbegrenzung eine Halterung für das Anschlagselement aufweist, die mit dem Handrad drehbar aber in ihrer Lage zum Ventilhauptkörper in Betätigungsrichtung der Spindel fixiert am Ventilhauptkörper gehalten ist. Dabei ist die Halterung so ausgeführt, dass die Lage des Anschlagselements an der Halterung verändert werden kann, wobei die Halterung sich bei Betätigung des Handventils zwar mit dem Handrad und der Spindel mit dreht, sich jedoch nicht entlang der Betätigungsrichtung bewegt. Dies hat den Vorteil, dass eine im Handventil integrierte Hubbegrenzung geschaffen wird. Zudem kann das Anschlagselement zum Einstellen seiner Lage gut zugänglich angeordnet werden, sodass im besten Fall kein Werkzeug zu Einstellung der Hubbegrenzung nötig ist. Ferner kann durch die integrierte Ausführung der Hubbegrenzung die Abdichtung des Ventils bereits herstellerseitig optimiert werden, sodass sich eine im Vergleich zu Nachrüst-Hubbegrenzungen erheblich bessere Dichtheit ergibt und gleichzeitig ein kompakter Aufbau geschaffen wird. Unter einem Ventilhauptkörper im Sinne der Erfindung kann ein einteiliger oder mehrteiliger Körper verstanden werden. Insbesondere mehrteilige Ausführungen, beispielsweise mit einem Ventilkörper und einem Handventiloberteil, sind nicht zuletzt aus Wartungs- und Montagesicht zweckmäßig.

Weiterbildend ist das Anschlagselement durch ein am Handrad angeordnetes Betätigungselement in seiner Lage in Bezug auf den Ventilhauptkörper einstellbar. Somit wird zum Einstellen der Lage des Anschlagselements kein gesondertes Werkzeug benötigt, da das Werkzeug im Handventil quasi integriert ist. Dies erleichtert Handhabbarkeit des Ventils und die Einstellbarkeit des Hubes nochmals merklich.

Es ist zweckmäßig, wenn das Anschlagselement eine Gewindemutter mit einem Außengewinde ist, und die Halterung eine Gewindehülse mit einem Innengewinde ist. Durch Drehen der Gewindemutter bewegt sich diese entlang der Gewindegänge der Gewindehülse, wodurch diese besonders schnell und präzise in ihrer Lage in Bezug zum Ventilhauptkörper verändert werden kann.

Es ist ferner von Vorteil, wenn das Handventil eine Schließbegrenzung aufweist, wobei zwischen Handrad und Spindel ein Kupplungselement angeordnet ist, um wahlweise die Drehverbindung von Handrad und Spindel auflösen oder herstellen zu können. Hierzu weist das Handrad zur Schließbegrenzung eine Gewindebuchse mit einem Innengewinde auf, wobei die Spindel mit ihrem Außengewinde in die Gewindebuchse eingeschraubt ist. Vorzugsweise ist die Gewindebuchse integral mit dem Handrad ausgeführt. Die Spindel ist bei gelöster Drehverbindung durch Drehung des Handrads relativ zum Handrad in Betätigungsrichtung zum Einstellen der Schließposition der Spindel bewegbar. Somit kann durch das Kupplungselement ermöglicht werden, dass die Spindel unabhängig vom Handrad gedreht werden kann. Wenn das Handrad in seiner maximalen Schließstellung weiter gedreht wird, bewegt sich die Spindel entlang der Betätigungsrichtung wodurch die maximale Schließposition eingestellt wird. Alternativ kann das Handrad auch unabhängig von der Spindel entlang der Betätigungsrichtung bewegt werden, wodurch die Schließstellung in die andere Richtung verändert werden kann. Wenn die gewünschte Schließstellung der Spindel somit erreicht ist, wird durch das Kupplungselement die Verbindung zwischen Handrad und Spindel wieder hergestellt, wodurch sich das Handrad wieder zusammen mit der Spindel zur Betätigung des Handventils drehen lässt. Dadurch wird eine integrierte aber von der Hubbegrenzung unabhängige Schließbegrenzung erreicht, durch welche die Schließstellung ohne großen Aufwand oder gesondertes Werkzeug eingestellt werden kann. Ferner muss so auch nach Betätigung der Schließbegrenzung oder der Hubbegrenzung die jeweils andere Begrenzung nicht nachjustiert werden.

Zweckmäßigerweise ist das Betätigungselement für die Hubbegrenzung das Kupplungselement der Schließbegrenzung. So können mit einem einzigen Bauteil auf besonders kompakte Weise zwei unterschiedliche Funktionen umgesetzt werden. So kann bei gelöster Drehverbindung durch Drehung des Handrads die Schließbegrenzung betätigt werden, und durch Drehung des Betätigungs- bzw. Kupplungselements der Hub eingestellt werden. Hierdurch ergibt sich ein besonders kompakter Aufbau wobei sowohl die Schließ- als auch die Hubbegrenzung einfach und schnell zu betätigen sind.

Zweckmäßigerweise schlägt die Gewindebuchse der Schließbegrenzung bei hergestellter Drehverbindung in der Schließposition der Spindel am Ventilhauptkörper an. Sobald die Gewindebuchse anschlägt, kann das Handrad nicht weiter betätigt werden, sodass das Handventil maximal geschlossen ist. Wenn nunmehr die Drehverbindung zwischen Kupplungs- bzw. Betätigungselement und Handrad gelöst wird, kann die Schließbegrenzung wie oben beschrieben eingestellt werden.

Es ist von Vorteil, wenn das Handrad wenigstens einen Steg, vorzugsweise drei Stege, aufweist, wobei der wenigstens eine Steg formschlüssig in eine Nut der Halterung der Hubbegrenzung eingreift. Somit kann die Halterung bzw. die Gewindehülse der Hubbegrenzung über eine formschlüssige Verbindung gemeinsam mit dem Handrad in Drehung versetzt werden ohne dabei ein Seigen bzw. Senken des Handrades zu behindern.

Weiterbildend ist der wenigstens eine Steg mit der Gewindebuchse verbunden. Somit kann die Gewindebuchse zusammen mit dem wenigstens einen Steg eine kompakte Einheit am Handrad bilden.

Es ist zweckmäßig, wenn das Betätigungselement wenigstens einen Vorsprung, vorzugsweise vier Vorsprünge, aufweist, wobei der wenigstens eine Vorsprung formschlüssig in eine Ausnehmung des Anschlagselements eingreift. Diese sind bevorzugt als sich parallel zur Betätigungsrichtung erstreckende Längsstege ausgebildet, sodass sie auch bei unterschiedlichen Lagen des Anschlagselements mit diesem in Eingriff stehen und das Betätigungselement auch in leicht angehobener Stellung um Verstellen der Höhenlage des Anschlagselements betätigt - sprich per Hand - gedreht werden kann. Hierdurch ist das Betätigungselement drehfest mit dem Anschlagselement verbunden, wodurch die oben beschriebene Funktion zum Einstellen des Hubs einfach realisiert werden kann.

Zweckmäßigerweise weist das Handventil eine am Ventilhauptkörper angeordnete Sichtanzeige auf, wobei die Sichtanzeige in der Schließposition der Spindel zumindest teilweise durch das Handrad verdeckt ist. Durch Betätigen des Handventils wird die Sichtanzeige entweder zu einem größeren Teil sichtbar (öffnende Bewegung in Betätigungsrichtung), oder weiter verdeckt (schließende Bewegung in Betätigungsrichtung). Hierdurch kann die Schließstellung des Ventils gut anhand der Sichtanzeige mit einem Blick abgelesen werden. Hierbei ist es von Vorteil, wenn die Sichtanzeige eine Skala aufweist, die die Beurteilung der Stellung vereinfacht.

Es ist von Vorteil, wenn die Sichtanzeige einen zumindest teilweise umlaufenden Vorsprung aufweist, der die Halterung in ihrer Lage in Bezug zum Ventilhauptkörper fixiert. Hierdurch kann gewährleistet werden, dass die Halterung bzw. die Gewindehülse mit dem Handrad drehbar ist, sich aber gleichzeitig nicht in Betätigungsrichtung bewegen kann, insbesondere dann, wenn die Sichtanzeige am Ventilhauptkörper fixiert ist.

Weiterbildend weist das Handventil ein verschiebliches und am Handrad geführtes Riegelelement auf, wobei der Ventilhauptkörper oder die Sichtanzeige eine Mehrzahl an Riegelnuten aufweist. Das Riegelelement ist in Eingriff mit einer der Riegelnuten bringbar, sodass das Handrad gegen Verdrehung gegenüber dem Ventilhauptkörper oder der Sichtanzeige gesichert ist. Hierdurch kann eine gewünschte Öffungs- bzw. Schließstellung des Handventils fixiert werden, sodass eine ungewollte oder ungewünschte Betätigung vermieden wird.

Hierzu kann es zweckmäßig sein, wenn das Riegelelement in der Eingriffsposition, insbesondere durch ein Schloss oder dergleichen, gesichert werden kann. Dadurch kann ein Betätigen des Handventils sicher vermieden werden, um beispielsweise unbefugten Zugriff zu verhindern.

Zweckmäßigerweise weist das Handrad eine erste Markierung und jede Riegelnut ein zweite Markierung auf, wobei das Riegelelement bei Fluchtung der ersten und zweiten Markierung in Eingriff mit der Riegelnuten bringbar ist. Dadurch wird gewährleistet, dass das Riegelelement sicher in eine Riegelnut einzuführen ist und die gewünschte Stellung des Handventils gesichert werden kann.

Es ist von Vorteil, wenn zwischen dem Ventilhauptkörper und der Sichtanzeige und/oder zwischen der Sichtanzeige und/oder zwischen dem Betätigungselement und dem Handrad wenigstens eine Dichtung angeordnet ist. Somit kann eine größtmögliche Dichtheit des gesamten Handventils erreicht werden. Dies spielt beispielsweise bei der Reinigung des Handventils eine große Rolle, da bei einer unzureichenden Dichtheit die Schmierung der Spindel über die Zeit ausgewaschen werden kann, wodurch es unter Umständen zu Beschädigungen oder Funktionsverlusten kommen kann. Gerade bei kombinierter Hub- und Schließbegrenzung ist so eine für ein steigendes Handventil außergewöhnlich gute Abdichtung und damit Langlebigkeit erzielbar. Auch wird so ein Eindringen von Feuchtigkeit oder Schmutz zuverlässig verhindert.

Es ist zweckmäßig, wenn die Drehverbindung zwischen Handrad und Spindel eine Zahnverbindung ist. Insbesondere greift also das Kupplungselement bzw. das Betätigungselement über eine Zahnverbindung formschlüssig am Handrad an, sodass bei in Eingriff gebrachter Zahnverbindung eine sichere Kraftübertragung vom Handrad auf die Spindel gewährleistet werden kann. Hierbei kann die Zahnverbindung in Form eines am Kupplungselement angebrachten Zahnkranzes ausgestaltet sein, der zweckmäßigerweise eine recht feine Zahnstruktur aufweist, um so eine feiner Justierung zu ermöglichen.

Weiterbildend ist das Betätigungselement über eine Sicherungsschraube mit der Spindel verschraubt. Die Spindel kann beispielsweise über eine Zweikant- oder Feder/Nut-Verbindung mit dem Betätigungselement in Eingriff stehen, wobei das Betätigungselement durch eine Schraube an der Spindel gesichert ist. Somit kann das Betätigungselement nicht versehentlich betätigt werden, da zunächst die Schraube zu lösen wäre.

Hierbei ist es auch von Vorteil, wenn zwischen Sicherungsschraube und Betätigungselement wenigstens eine Dichtung angeordnet ist. Dadurch wird die Dichtheit des Handventils weiter erhöht, sodass es nicht zum Eindringen von Feuchtigkeit, Schmutz oder dergleichen kommen kann.

Nachfolgend wird die Erfindung anhand eines in der Zeichnung dargestellten Ausführungsbeispiels näher erläutert. Hierbei zeigen schematisch:
- Fig. 1: eine Explosionsdarstellung des erfindungsgemäßen Handventils;
- Fig. 2: eine perspektivische Ansicht eines erfindungsgemäßen Handventils mit Hubbegrenzung in einer ersten Stellung;
- Fig. 3: einen Schnitt durch das in Fig. 2 gezeigte Handventil entlang der Anschlussrichtung des Handventils;
- Fig. 4: einen Schnitt durch das in Fig. 2 gezeigte Handventil orthogonal zur Anschlussrichtung des Handventils;
- Fig. 5: eine perspektivische Ansicht eines erfindungsgemäßen Handventils mit Hubbegrenzung in einer zweiten Stellung;
- Fig. 6: einen Schnitt durch das in Fig. 5 gezeigte Handventil entlang der Anschlussrichtung des Handventils;
- Fig. 7: einen Schnitt durch das in Fig. 5 gezeigte Handventil orthogonal zur Anschlussrichtung des Handventils;
- Fig. 8: eine perspektivische Ansicht des erfindungsgemäßen Handventils ohne Handrad; und
- Fig. 9: eine perspektivische Ansicht der Sichtanzeige.

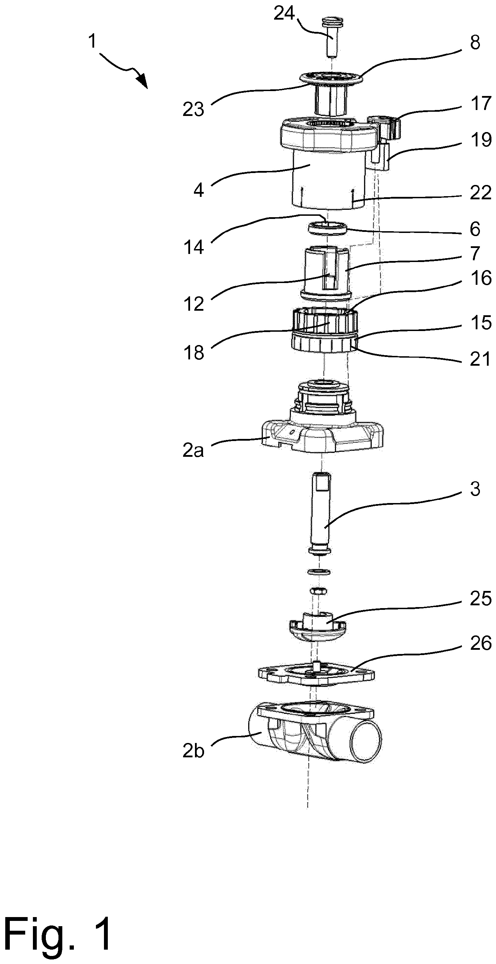

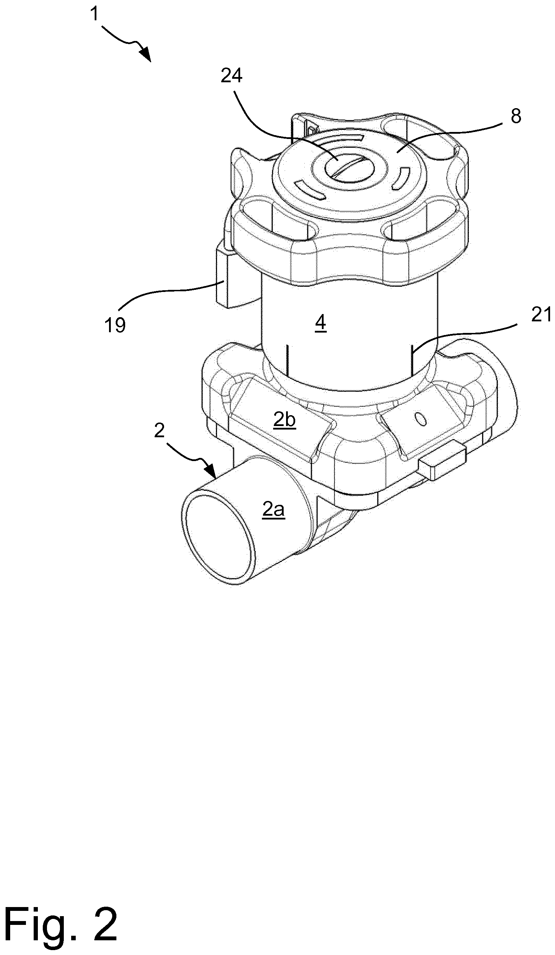

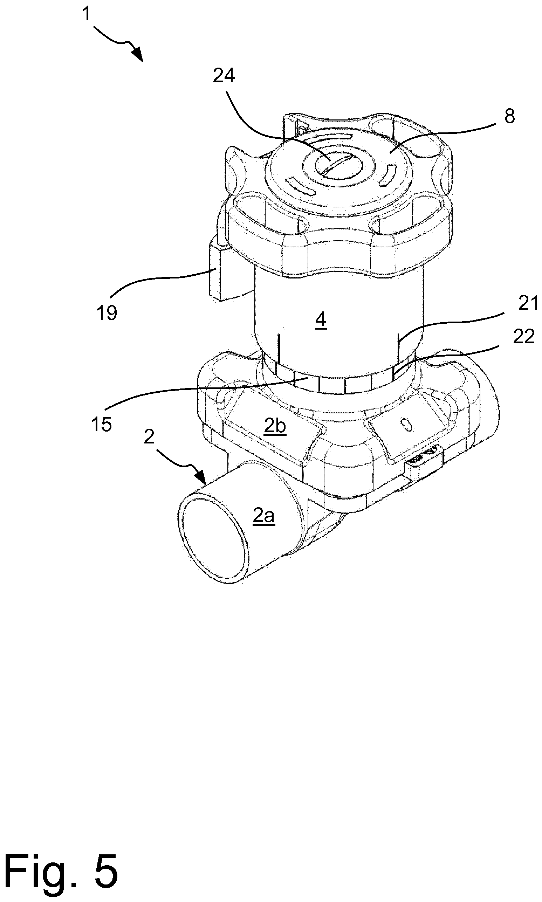

In den Figuren 1 bis 7 ist ein Handventil 1 in Form eines Membranventils mit einem mehrteiligen Ventilhauptkörper 2 und einer darin beweglich angeordneten Spindel 3 dargestellt. Der Ventilhauptkörper 2 besteht in diesem Ausführungsbeispiel aus einem Ventilkörper 2a sowie einem Handventiloberteil 2b, die beispielsweise miteinander verschraubt sein können. Die Spindel 3 kann zur Betätigung des Handventils 1 mittels eines an der Spindel 3 angeordneten Handrads 4 in seiner Lage relativ zum Ventilhauptkörper 2 zusammen mit dem Handrad 4 verstellt werden. Wird wie dargestellt ein rechtsdrehendes Gewinde zur Verstellung verwendet, so wird durch Drehung des Handrads 4 im Uhrzeigersinn das Handventil 1 geschlossen. Durch Drehung des Handrades 4 gegen den Uhrzeigersinn wird das Handventil 1 geöffnet. Um das Handventil 1 zu schließen ist an der Spindel 3 ein Druckstück 25 angeordnet, welches auf eine Membran 26 in herkömmlicher Art und Weise einwirkt. Selbstverständlich sind auch Ausführungen mit einem Linksgewinde denkbar.

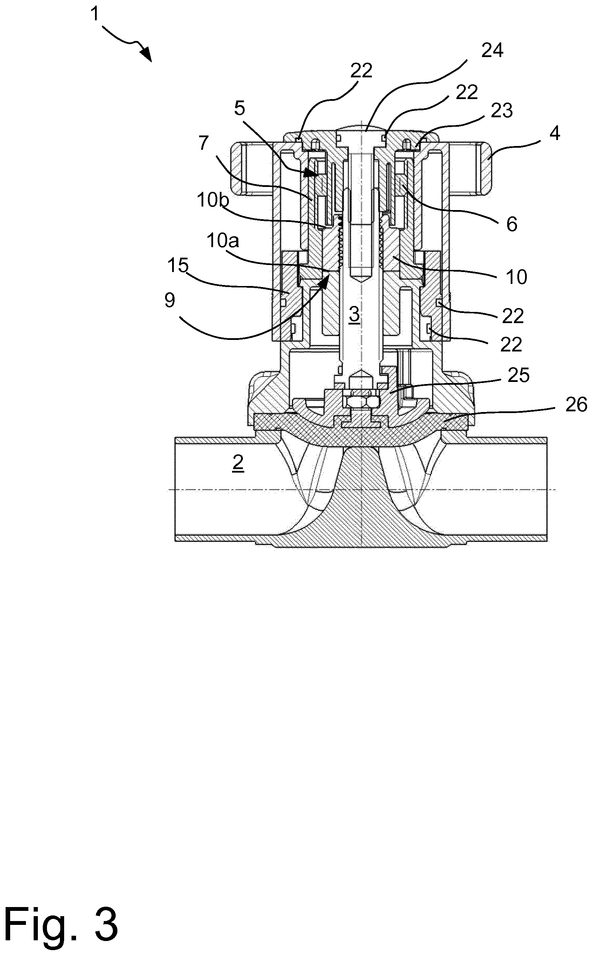

Ferner weist das Handrad 4 eine integrale Gewindebuchse 10 auf, die über drei Stege 11 mit dem Handrad 4 verbunden ist. Die Spindel 3 ist wie insbesondere in den Figs. 3, 4, 6 und 7 zu erkennen in die Gewindebuchse 10 eingeschraubt.

Das Handventil 1 weist eine Hubbegrenzung 5 auf, die ein Anschlagselement in Form einer Gewindemutter 6 mit Außengewinde und eine Halterung in Form einer Gewindehülse 7 mit Innengewinde umfasst. Die Gewindemutter 6 ist wie in den Figs. 3, 4, 6 und 7 dargestellt in die Gewindehülse 7 eingeschraubt. Die Gewindehülse 7 ist am Handventiloberteil 2b des Ventilhauptkörpers 2 angeordnet und weist drei Nuten 12 auf, die mit den drei Stegen 11 des Handrads in formschlüssigen Eingriff stehen. Somit wird die Gewindehülse 7 bei Drehung des Handrads 4 ebenfalls gedreht. Die Gewindehülse 7 ist - wie nachfolgende beschrieben wird - nicht in der Betätigungsrichtung der Spindel 3 beweglich. Mit anderen Worten kann die Gewindehülse 7 zwar gegenüber dem Ventilhauptkörper 2 gedreht werden, aber nicht von diesem weg- oder zu diesem hinbewegt werden. Eine translatorische Bewegung in Bezug auf den Ventilhauptkörper 2 ist also nicht möglich.

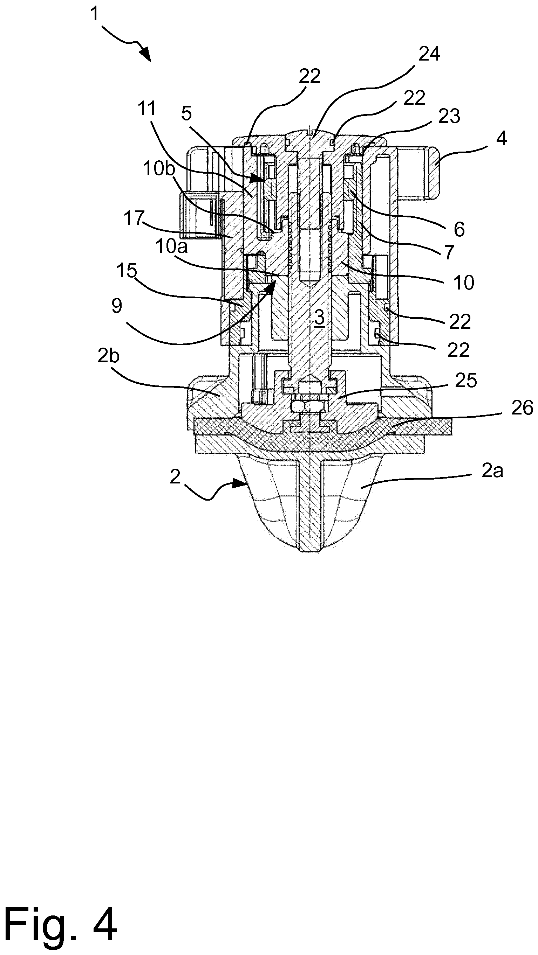

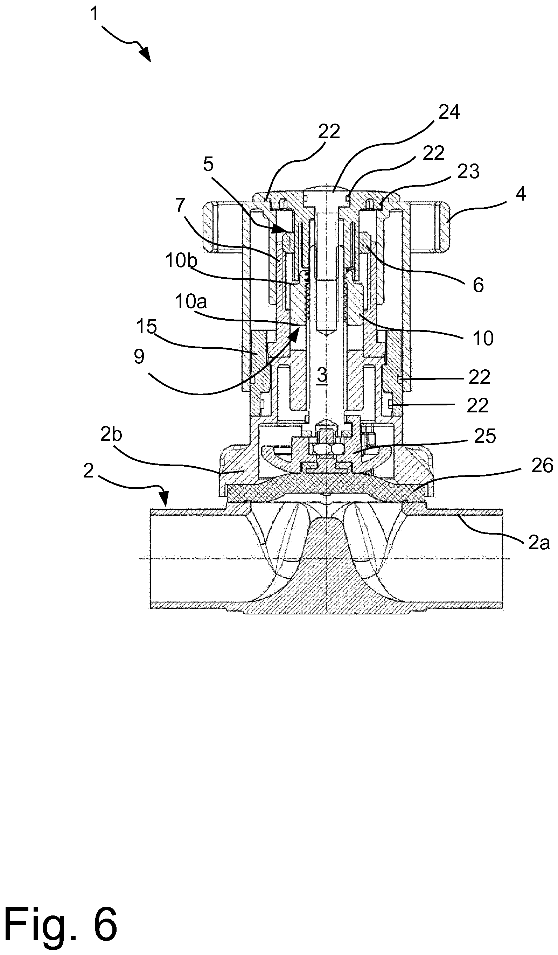

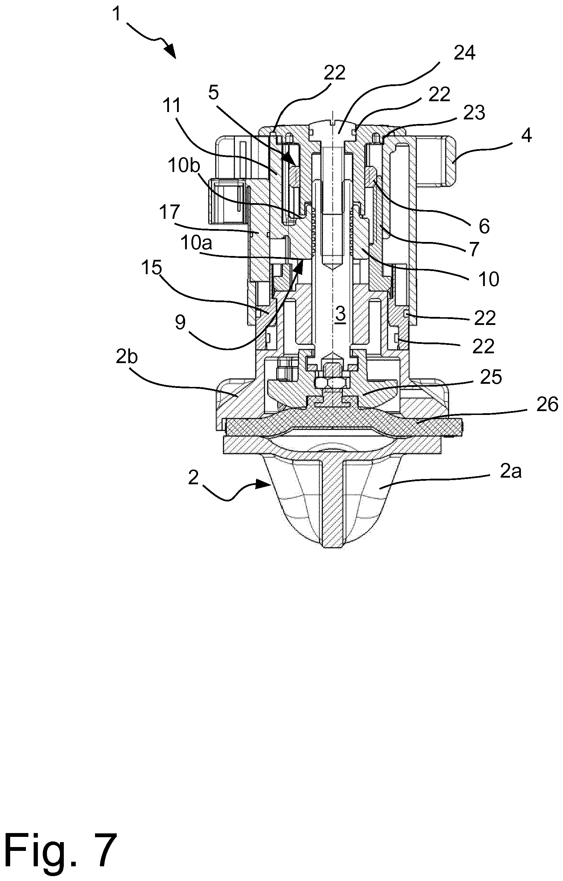

Um den Hub zu verändern wird die Lage der Gewindemutter 6 in der Gewindehülse 7 durch ein- bzw. ausschrauben verändert. In den Figs. 6 und 7 ist die Gewindemutter 6 ans obere Ende der Gewindehülse 7 geschraubt, sodass ein maximaler Hub erreicht werden kann. Im Gegensatz hierzu ist die Gewindemutter 6 wie in den Figs. 3 und 4 dargestellt weiter in die Gewindehülse 7 eingeschraubt, sodass ein geringerer Maximalhub erzielt wird. Wird das Handrad 4 zum Öffnen des Handventils 1 betätigt, entfernt sich das Handrad 4 mitsamt der Spindel 3 vom Ventilhauptkörper 2. Hierbei wird die Gewindehülse 7 zwar mitgedreht, jedoch wird diese nicht vom Ventilhauptkörper 2 wegbewegt. Mithin bleibt der eingestellte Abstand zwischen Gewindemutter 6 und Ventilhauptkörper 2 konstant. Sobald die Gewindebuchse 10 mit der oberen Anschlagsfläche 10a an der Gewindemutter 6 anschlägt, kann das Handrad 4 nicht weiter betätigt werden, sodass der Hub der Spindel 3 also entsprechend begrenzt ist.

Zum ein- und ausschrauben der Gewindemutter 6 weist das Handventil 1 ein Betätigungs- bzw. Kupplungselement 8 auf, welches zum einen dazu dient, eine Drehverbindung zwischen Handrad 4 und Spindel 3 herstellen und auflösen zu können. Zum anderen kann über das Betätigungselement 8 bei gelöster Drehverbindung die Gewindemutter 6 relativ zur Gewindehülse 7 gedreht und in diese ein- bzw. ausgeschraubt werden. Hierfür weist das Betätigungselement 8 vier Vorsprünge 13 auf, die formschlüssig in entsprechende Ausnehmungen der Gewindemutter 6 eingreifen. Somit wird durch eine Drehung des Betätigungselements 8 relativ zum Handrad 4 die Gewindemutter 6 relativ zur Gewindehülse 7 bewegt, da die Gewindehülse 7 drehfest mit dem Handrad 4 verbunden ist. Dadurch kann der gewünschte Hub eingestellt werden.

Ferner umfasst das Handventil 1 eine Schließbegrenzung 9, die es ermöglicht die Schließstellung der Spindel 3 einzustellen. Hierzu muss ebenfalls die Drehverbindung zwischen Betätigungselement 8 und Handrad 4 gelöst werden. Die Spindel 3 kann dann relativ zum Handrad 4 gedreht werden. Hierzu wird das Handrad 4 zunächst vollständig eingeschraubt, bis die untere Anschlagsfläche 10b der Gewindebuchse 10 am Handventiloberteil 2b des Ventilhauptkörpers 2 anschlägt. Wird das Handrad 4 nun weiter gedreht, wird nur noch die Spindel 3 in ihrer Lage relativ zum Ventilhauptkörper 2 bewegt, aber nicht mehr das Handrad 4. Durch Festhalten des Betätigungselements 8 und Drehung des Handrads 4 gegen den Uhrzeigesinn wird nur das Handrad 4 in seiner Lage zum Ventilhauptkörper 2 verändert, wodurch die Schließstellung in die andere Richtung verändert werden kann. Hierbei ist es wichtig, dass die formschlüssige Verbindung zwischen Spindel 3 und Betätigungselement 8 wie in den Figs. 3, 4, 6 und 7 dargestellt ausreichend Bewegungsraum bietet, sodass die Spindel 3 je nachdem welche Schließstellung eingestellt wird, tiefer in das Betätigungselements 8 eingeführt wird bzw. aus diesem ausgeführt wird, ohne dass der Formschluss zwischen Spindel 3 und Betätigungselement 8 aufgelöst wird. In diesem Ausführungsbeispiel ist die Verbindung zwischen Betätigungselement 8 und Spindel 3 durch eine Zweikantverbindung ausgeführt, jedoch sind auch andere Verbindung zur Kraftübertragung möglich.

Um die Drehverbindung zwischen Betätigungselement 8 und Handrad 4 herstellen und auflösen zu können, ist eine Zahnverbindung 23 vorgesehen, die bei angehobenen Betätigungselement 8 nicht mehr in Verbindung mit der Zahnverbindung 23 des Handrad 4 steht. Somit kann in diesem Fall keine Drehkraft vom Handrad 4 mehr auf die Spindel 3 übertragen werden. In diesem Ausführungsbeispiel kann das Betätigungselement 8 noch zusätzlich durch eine Sicherungsschraube 24 gesichert werden, welche in die Spindel 3 eingeschraubt ist.

Ferner weist das Handventil 1 eine Sichtanzeige 15 auf, die bei vollständig geschlossenem Handventil 1 durch das Handrad 4 verdeckt wird. Die Sichtanzeige 15 ist ortsfest am Ventilhauptkörper 2 bzw. am Handventiloberteil 2b angeordnet und wird bei Drehung des Handrads 4 gegen den Uhrzeigersinn Stück für Stück sichtbar. Anhand der Sichtanzeige 15 kann dann mit einem Blick festgestellt werden, wie weit das Handventil 1 geöffnet oder geschlossen ist.

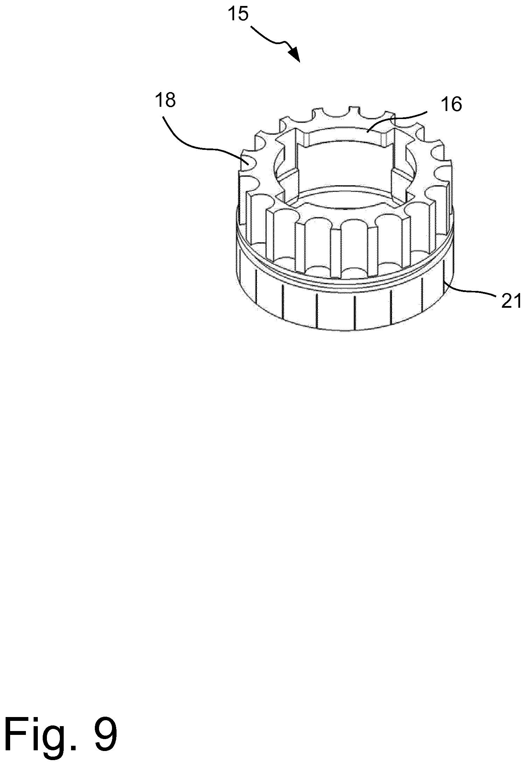

Des Weiteren weist die Sichtanzeige 15 eine zumindest teilweise umlaufenden Vorsprung 16 auf, wie man insbesondere in Fig. 9 gut erkennen kann. Dieser Vorsprung 16 fixiert die Gewindehülse 7, sodass diese zwar drehbar gegenüber dem Ventilhauptkörper 2 ist, aber nicht von diesem hin- oder wegbewegt werden kann. Diese ist für die oben beschriebene Hubbegrenzung 5 notwendig, jedoch könnte die Gewindehülse 7 auch über einen Klemmring oder dergleichen festgelegt werden, sodass die Sichtanzeige 15 nicht zwingend vorzusehen ist.

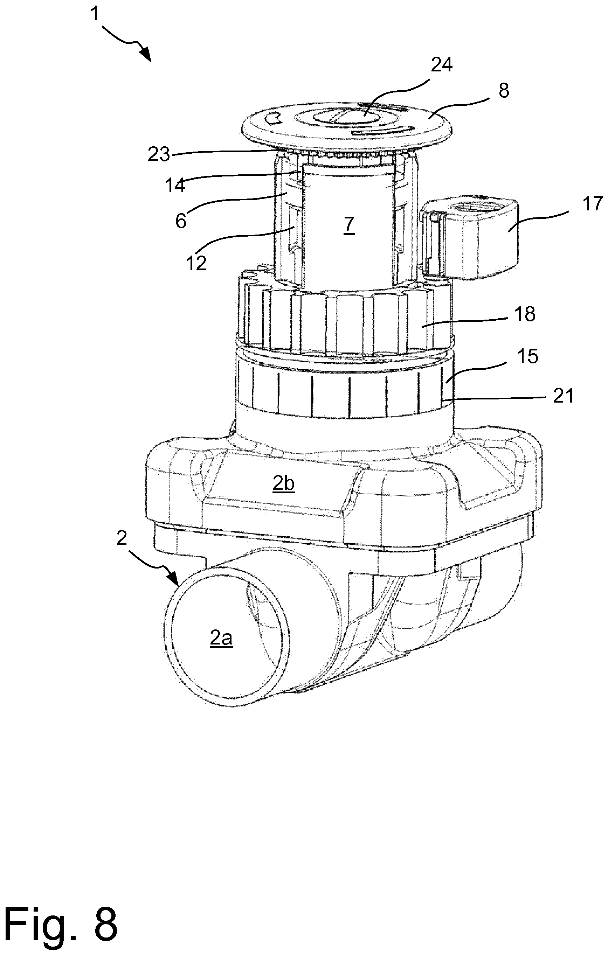

Des Weiteren kann man in Figs. 8 und 9 gut erkennen, dass die Sichtanzeige 15 eine Vielzahl an umlaufenden Riegelnuten 18 aufweist. Diese Riegelnuten 18 wirken mit einem am Handrad 4 linear geführten Riegelelement 17 zusammen, welches parallel zur Spindel 3 bewegt werden kann. Wenn das Riegelelement 17 in Richtung des Ventilhauptkörpers 2 bewegt wird, greift der untere Teil des Riegelelements 17 in eine der Riegelnuten 18 des Sichtanzeige 15 ein, sodass eine Drehung des Handrads 4 nicht mehr möglich ist. Das Riegelelement 17 kann in der Eingriffsstellung beispielsweise durch ein Schloss 19 fixiert werden (vgl. Fig. 8).

Damit das Riegelelement 17 passend in eine der Riegelnuten 18 eingeführt werden kann, weist das Handrad 4 einer erste Markierung 20 auf und die Sichtanzeige 15 an der Position der jeweiligen Riegelnut 18 eine zweite Markierung 21 auf. Sobald die beiden Markierungen 20, 21 fluchten, kann das Riegelelement 17 in die Riegelnut 18 eingeführt werden.

Um eine ausreichende Dichtheit zu gewährleisten ist das Handventil 1 mit einer Vielzahl an Dichtungen 22 zwischen den einzelnen Elementen versehen. In diesem Ausführungsbeispiel sind die Dichtungen 22 als O-Ringe die in entsprechenden Nuten sitzen ausgeführt. Dichtungen 22 sind zwischen der Sichtanzeige 15 und dem Ventilhauptkörper 2 bzw. Handventiloberteil 2b, zwischen dem Handrad 4 und der Sichtanzeige 15, zwischen dem Betätigungselement 8 und dem Handrad 4 sowie zwischen der Sicherungsschraube 24 und dem Betätigungselement 8 vorgesehen. Selbstverständlich sind auch weitere Dichtungen vorgesehen, so beispielsweise zwischen dem Ventilkörper 2a und dem Handventiloberteil 2b.

### Bezugszeichenliste

- 1: Handventil
- 2: Ventilhauptkörper
- 2a: Ventilkörper
- 2b: Handventiloberteil
- 3: Spindel
- 4: Handrad
- 5: Hubbegrenzung
- 6: Gewindemutter (Anschlagselement)
- 7: Gewindehülse (Halterung)
- 8: Betätigungselement (Kupplungselement)
- 9: Schließbegrenzung
- 10: Gewindebuchse
- 10a: obere Anschlagsfläche
- 10b: untere Anschlagsfläche
- 11: Steg
- 12: Nut der Gewindehülse
- 13: Vorsprung des Betätigungselements
- 14: Ausnehmung der Gewindemutter
- 15: Sichtanzeige
- 16: Vorsprung der Sichtanzeige
- 17: Riegelelement
- 18: Riegelnut
- 19: Schloss
- 20: erste Markierung
- 21: zweite Markierung
- 22: Dichtung
- 23: Zahnverbindung
- 24: Sicherungsschraube
- 25: Druckstück
- 26: Membran

## Patentansprüche

1. Handventil (1) mit einem Ventilhauptkörper (2) und einer darin zumindest in einer Betätigungsrichtung beweglich angeordneten Spindel (3), die zur Betätigung des Handventils mittels eines an der Spindel (3) angeordneten Handrades (4) in seiner Lage relativ zum Ventilhauptkörper (2) zusammen mit dem Handrad (4) in Betätigungsrichtung der Spindel (3) verstellt werden kann, wobei das Handventil (1) eine Hubbegrenzung (5) für die Spindel (3) mit einem Anschlagselement (6) aufweist, das in seiner Lage in Bezug auf den Ventilhauptkörper (2) einstellbar ist,
**dadurch gekennzeichnet, dass**
die Hubbegrenzung (5) eine Halterung (7) für das Anschlagselement (6) aufweist, die mit dem Handrad (4) drehbar aber in ihrer Lage zum Ventilhauptkörper (2) in Betätigungsrichtung der Spindel (3) fixiert am Ventilhauptkörper (2) gehalten ist.

2. Handventil (1) nach Anspruch 1,
**dadurch gekennzeichnet, dass**
das Anschlagselement (6) durch ein am Handrad (4) angeordnetes Betätigungselement (8) in seiner Lage an der Halterung (7) in Bezug auf den Ventilhauptkörper (2) einstellbar ist.

3. Handventil (1) nach Anspruch 1 oder 2,
**dadurch gekennzeichnet, dass**
das Anschlagselement (6) eine Gewindemutter mit einem Außengewinde ist, und die Halterung (7) eine Gewindehülse mit einem Innengewinde ist.

4. Handventil (1) nach einem der vorhergehenden Ansprüche,
**dadurch gekennzeichnet, dass**
das Handventil (1) eine Schließbegrenzung (9) aufweist, wobei zwischen Handrad (4) und Spindel (3) ein Kupplungselement (8) angeordnet ist, um wahlweise die Drehverbindung von Handrad (4) und Spindel (3) auflösen oder herstellen zu können;
und das Handrad (4) zur Schließbegrenzung eine Gewindebuchse (10) mit einem Innengewinde aufweist, wobei die Spindel (3) mit ihrem Außengewinde in die Gewindebuchse (10) eingeschraubt ist,
und die Spindel (3) bei gelöster Drehverbindung durch Drehung des Handrads (4) relativ zum Handrad (4) in Betätigungsrichtung zum Einstellen der Schließposition der Spindel (3) bewegbar ist.

5. Handventil (1) nach Anspruch 4,
**dadurch gekennzeichnet, dass**
das Kupplungselement (8) der Schließbegrenzung (9) auch das Betätigungselement (8) der Hubbegrenzung (5) ist.

6. Handventil (1) nach Anspruch 4 oder 5,
**dadurch gekennzeichnet, dass**
die Gewindebuchse (10) bei hergestellter Drehverbindung in der Schließposition der Spindel (3) am Ventilhauptkörper (2) anschlägt.

7. Handventil (1) nach einem der vorhergehenden Ansprüche,
**dadurch gekennzeichnet, dass**
das Handrad (4) wenigstens einen Steg (11), vorzugsweise drei Stege (11), aufweist, wobei der wenigstens eine Steg (11) formschlüssig in eine Nut (12) der Halterung (7) eingreift.

8. Handventil (1) nach Anspruch 7,
**dadurch gekennzeichnet, dass**
der wenigstens eine Steg (11) mit der Gewindebuchse (10) verbunden ist.

9. Handventil (1) nach einem der vorhergehenden Ansprüche 2 bis 8,
**dadurch gekennzeichnet, dass**
das Betätigungselement (8) wenigstens einen Vorsprung (13), vorzugsweise vier Vorsprünge (13), aufweist, wobei der wenigstens eine Vorsprung (13) formschlüssig in eine Ausnehmung (14) des Anschlagselements (6) eingreift.

10. Handventil (1) nach einem der vorhergehenden Ansprüche,
**dadurch gekennzeichnet, dass**
das Handventil (1) eine am Ventilhauptkörper (2) angeordnete Sichtanzeige (15) aufweist, wobei die Sichtanzeige (15) in der Schließposition der Spindel (3) zumindest teilweise durch das Handrad (4) verdeckt ist.

11. Handventil (1) nach Anspruch 10,
**dadurch gekennzeichnet, dass**
die Sichtanzeige (15) einen zumindest teilweise umlaufenden Vorsprung (16) aufweist, wobei der Vorsprung (16) die Halterung (7) in ihrer Lage in Bezug zum Ventilhauptkörper (2) fixiert.

12. Handventil (1) nach einem der vorhergehenden Ansprüche,
**dadurch gekennzeichnet, dass**
das Handventil (1) ein verschiebliches und am Handrad (4) geführtes Riegelelement (17) aufweist,
wobei der Ventilhauptkörper (2) oder die Sichtanzeige (15) eine Mehrzahl an Riegelnuten (18) aufweist,
wobei das Riegelelement (17) in Eingriff mit einer der Riegelnuten (18) bringbar ist, sodass das Handrad (4) gegen Verdrehung gegenüber dem Ventilhauptkörper (2) oder der Sichtanzeige (15) gesichert ist.

13. Handventil (1) nach Anspruch 12,
**dadurch gekennzeichnet, dass**
das Riegelelement (17) in der Eingriffsposition, insbesondere durch ein Schloss (19) oder dergleichen, gesichert werden kann.

14. Handventil (1) nach einem der Ansprüche 10 bis 13,
**dadurch gekennzeichnet, dass**
das Handrad (4) eine erste Markierung (20) aufweist,
und jede Riegelnut (18) ein zweite Markierung (21) aufweist,
wobei das Riegelelement (17) bei Fluchtung der ersten und zweiten Markierung (20, 21) in Eingriff mit der Riegelnuten (18) bringbar ist.

15. Handventil (1) nach einem der vorhergehenden Ansprüche 10 bis 14,
**dadurch gekennzeichnet, dass**
zwischen dem Ventilhauptkörper (2) und der Sichtanzeige (15) wenigstens eine Dichtung (22) angeordnet ist.

16. Handventil (1) nach einem der vorhergehenden Ansprüche 10 bis 15,
**dadurch gekennzeichnet, dass**
zwischen der Sichtanzeige (15) und dem Handrad (4) wenigstens eine Dichtung (22) angeordnet ist.

17. Handventil (1) nach einem der vorhergehenden Ansprüche 2 bis 16,
**dadurch gekennzeichnet, dass**
zwischen dem Betätigungselement (8) und dem Handrad (4) wenigstens eine Dichtung (22) angeordnet ist.

18. Handventil (1) nach einem der vorhergehenden Ansprüche 4 bis 17,
**dadurch gekennzeichnet, dass**
die Drehverbindung zwischen Handrad (4) und Spindel (3) eine Zahnverbindung (23) ist.

19. Handventil (1) nach einem der Ansprüche 2 bis 18,
**dadurch gekennzeichnet, dass**
das Betätigungselement (8) über eine Sicherungsschraube (24) mit der Spindel (3) verschraubt ist.

20. Handventil (1) nach Anspruch 19,
**dadurch gekennzeichnet, dass**
zwischen Sicherungsschraube (24) und Betätigungselement (8) wenigstens eine Dichtung (22) angeordnet ist.

## Claims

1. Manual valve (1) comprising a valve main body (2) and a spindle (3) which is arranged therein so as to be movable in at least one actuation direction and the position of which, in order to actuate the manual valve by means of a hand wheel (4) arranged on the spindle (3), can be adjusted relative to the valve main body (2) in the actuation direction of the spindle (3) together with the hand wheel (4), the manual valve (1) comprising a stroke limiter (5) for the spindle (3), which limiter has a stop element (6), the position of which can be adjusted with respect to the valve main body (2),
**characterised in that**
the stroke limiter (5) comprises a support (7) for the stop element (6), which support is held on the valve main body (2) so as to be rotatable by means of the hand wheel (4) but such that its position relative to the valve main body (2) is fixed in the actuation direction of the spindle (3).

2. Manual valve (1) according to claim 1,
**characterised in that**
the position of the stop element (6) on the support (7) can be adjusted with respect to the valve main body (2) by means of an actuation element (8) arranged on the hand wheel (4).

3. Manual valve (1) according to either claim 1 or claim 2,
**characterised in that**
the stop element (6) is a threaded nut having a male thread, and the support (7) is a threaded sleeve having a female thread.

4. Manual valve (1) according to any of the preceding claims,
**characterised in that**
the manual valve (1) has a closure limiter (9), a coupling element (8) being arranged between the hand wheel (4) and the spindle (3) in order to be able to selectively release or establish the rotary connection of the hand wheel (4) and the spindle (3);
and the hand wheel (4) has a threaded bush (10) having a female thread in order to limit closure, the male thread of the spindle (3) being screwed into the threaded bush (10), and, when the rotary connection is released, the spindle (3) can be moved relative to the hand wheel (4) in the actuation direction by rotating the hand wheel (4) in order to adjust the closed position of the spindle (3).

5. Manual valve (1) according to claim 4,
**characterised in that**
the coupling element (8) of the closure limiter (9) is also the actuation element (8) of the stroke limiter (5).

6. Manual valve (1) according to either claim 4 or claim 5,
**characterised in that**
the threaded bush (10) hits the valve main body (2) when the rotary connection is established and the spindle (3) is in the closed position.

7. Manual valve (1) according to any of the preceding claims,
**characterised in that**
the hand wheel (4) has at least one ridge (11), preferably three ridges (11), the at least one ridge (11) interlocking in a groove (12) in the support (7).

8. Manual valve (1) according to claim 7,
**characterised in that**
the at least one ridge (11) is connected to the threaded bush (10).

9. Manual valve (1) according to any of the preceding claims 2 to 8,
**characterised in that**
the actuation element (8) has at least one projection (13), preferably four projections (13), the at least one projection (13) interlocking in a recess (14) in the stop element (6).

10. Manual valve (1) according to any of the preceding claims,
**characterised in that**
the manual valve (1) has a visual display (15) arranged on the valve main body (2), at least part of the visual display (15) being covered by the hand wheel (4) when the spindle (3) is in the closed position.

11. Manual valve (1) according to claim 10,
**characterised in that**
the visual display (15) has an at least partially circumferential projection (16), the projection (16) fixing the position of the support (7) with respect to the valve main body (2).

12. Manual valve (1) according to any of the preceding claims,
**characterised in that**
the manual valve (1) has a slidable locking element (17) that is guided on the hand wheel (4),
the valve main body (2) or the visual display (15) having a plurality of locking grooves (18), the locking element (17) being able to be engaged with one of the locking grooves (18) such that the hand wheel (4) is prevented from twisting with respect to the valve main body (2) or the visual display (15).

13. Manual valve (1) according to claim 12,
**characterised in that**
the locking element (17) can be secured in the engaged position, in particular by a lock (19) or the like.

14. Manual valve (1) according to any of claims 10 to 13,
**characterised in that**
the hand wheel (4) has a first mark (20)
and each locking groove (18) has a second mark (21),
the locking element (17) being able to be engaged with the locking grooves (18) when the first and second marks (20, 21) are aligned.

15. Manual valve (1) according to any of the preceding claims 10 to 14,
**characterised in that**
at least one seal (22) is arranged between the valve main body (2) and the visual display (15).

16. Manual valve (1) according to any of the preceding claims 10 to 15,
**characterised in that**
at least one seal (22) is arranged between the visual display (15) and the hand wheel (4).

17. Manual valve (1) according to any of the preceding claims 2 to 16,
**characterised in that**
at least one seal (22) is arranged between the actuation element (8) and the hand wheel (4).

18. Manual valve (1) according to any of the preceding claims 4 to 17,
**characterised in that**
the rotary connection between the hand wheel (4) and the spindle (3) is a toothed connection (23).

19. Hand valve (1) according to any of claims 2 to 18,
**characterised in that**
the actuation element (8) is screwed to the spindle (3) by means of a securing screw (24).

20. Manual valve (1) according to claim 19,
**characterised in that**
at least one seal (22) is arranged between the securing screw (24) and the actuation element (8).

## Revendications

1. Soupape manuelle (1) comprenant un corps principal de soupape (2) dans lequel une tige (3) est montée mobile au moins dans une direction d'actionnement, laquelle tige, pour l'actionnement de la soupape manuelle, peut être réglée dans sa position par rapport au corps principal de soupape (2) conjointement avec le volant (4) dans la direction d'actionnement de la tige (3) au moyen d'un volant (4) agencé sur la tige (3), la soupape manuelle (1) comprenant une limitation de course (5) pour la tige (3), pourvue d'un élément de butée (6) qui peut être réglé dans sa position par rapport au corps principal de soupape (2),
**caractérisée en ce que**
la limitation de course (5) comprend un élément de retenue (7) pour l'élément de butée (6), lequel élément de retenue est maintenu sur le corps principal de soupape (2) de manière à pouvoir tourner avec le volant (4) mais en étant fixé dans sa position par rapport au corps principal de soupape (2) dans la direction d'actionnement de la tige (3).

2. Soupape manuelle (1) selon la revendication 1,
**caractérisée en ce que**
l'élément de butée (6) peut être réglé dans sa position sur l'élément de retenue (7) par rapport au corps principal de soupape (2) par un élément d'actionnement (8) agencé sur le volant (4).

3. Soupape manuelle (1) selon la revendication 1 ou 2,
**caractérisée en ce que**
l'élément de butée (6) comprend un écrou fileté présentant un filetage extérieur, et l'élément de retenue (7) est une douille filetée pourvue d'un filet extérieur.

4. Soupape manuelle (1) selon l'une quelconque des revendications précédentes,
**caractérisée en ce que**
la soupape manuelle (1) comprend une limitation de fermeture (9), un élément d'accouplement (8) étant agencé entre le volant (4) et la tige (3), afin de pouvoir défaire ou établir la liaison rotative entre le volant (4) et la tige (3) ;
et le volant (4) comprend pour la limitation de fermeture une douille filetée (10) pourvue d'un filet intérieur, la tige (3) étant vissée dans la douille filetée (10) au moyen de son filet extérieur, et la tige (3), lorsque la liaison rotative est défaite, peut à la suite d'une rotation du volant (4) être déplacée par rapport au volant (4) dans la direction d'actionnement pour régler la position de fermeture de la tige (3).

5. Soupape manuelle (1) selon la revendication 4,
**caractérisée en ce que**
l'élément d'accouplement (8) de la limitation de fermeture (9) est également l'élément d'actionnement (8) de la limitation de course (5).

6. Soupape manuelle (1) selon la revendication 4 ou 5,
**caractérisée en ce que**
la douille filetée (10), lorsque la liaison rotative est établie et lorsque la tige (3) se trouve dans la position de fermeture, est en butée contre le corps principal de soupape (2).

7. Soupape manuelle (1) selon l'une quelconque des revendications précédentes,
**caractérisée en ce que**
le volant (4) comprend au moins un élément jointif (11), de préférence trois éléments jointifs (11), l'élément ou les éléments jointifs (11) s'insérant par coopération de formes dans une rainure (12) de l'élément de retenue (7).

8. Soupape manuelle (1) selon la revendication 7,
**caractérisée en ce que**
l'élément ou les éléments jointifs (11) sont reliés à la douille filetée (10).

9. Soupape manuelle (1) selon l'une quelconque des revendications 2 à 8,
**caractérisée en ce que**
l'élément d'actionnement (8) comprend au moins une partie saillante (13), de préférence quatre parties saillantes (13), la ou les parties saillantes (13) s'insérant par coopération de formes dans un évidement (14) de l'élément de butée (6).

10. Soupape manuelle (1) selon l'une quelconque des revendications précédentes,
**caractérisée en ce que**
la soupape manuelle (1) comprend un indicateur visuel (15) agencé sur le corps principal de soupape (2), l'indicateur visuel (15), lorsque la tige (3) se trouve dans la position de fermeture, étant au moins en partie dissimulé par le volant (4).

11. Soupape manuelle (1) selon la revendication 10,
**caractérisée en ce que**
l'indicateur visuel (15) comprend une partie saillante (16) au moins en partie périphérique, la partie saillante (16) fixant l'élément de retenue (7) dans la position de ce dernier par rapport au corps principal de soupape (2).

12. Soupape manuelle (1) selon l'une quelconque des revendications précédentes,
**caractérisée en ce que**
la soupape manuelle (1) comprend un élément de verrouillage (17) mobile et guidé sur le volant (4),
le corps principal de soupape (2) ou l'indicateur visuel (15) comprend une pluralité de rainures de verrouillage (18),
l'élément de verrouillage (17) peut être amené en contact avec une des rainures de verrouillage (18), de sorte que le volant (4) est empêché de tourner par rapport au corps principal de soupape (2) ou à l'indicateur visuel (15).

13. Soupape manuelle (1) selon la revendication 12,
**caractérisée en ce que**
l'élément de verrouillage (17) peut être bloqué dans la position d'entrée en contact, en particulier par un verrou (19) ou similaire.

14. Soupape manuelle (1) selon l'une quelconque des revendications 10 à 13, **caractérisée en ce que**
le volant (4) comprend un premier marquage (20),
et chaque rainure de verrouillage (18) comprend un deuxième marquage (21), l'élément de verrouillage (17), lorsque le premier et le deuxième marquage (20, 21) sont alignés, pouvant être amené en contact avec les rainures de verrouillage (18).

15. Soupape manuelle (1) selon l'une quelconque des revendications 10 à 14,
**caractérisée en ce que**
au moins un joint (22) est agencé entre le corps principal de soupape (2) et l'indicateur visuel (15).

16. Soupape manuelle (1) selon l'une quelconque des revendications 10 à 15,
**caractérisée en ce que**
au moins un joint (22) est agencé entre l'indicateur visuel (15) et le volant (4).

17. Soupape manuelle (1) selon l'une quelconque des revendications 2 à 16,
**caractérisée en ce que**
au moins un joint (22) est agencé entre l'élément d'actionnement (8) et le volant (4).

18. Soupape manuelle (1) selon l'une quelconque des revendications 4 à 17,
**caractérisée en ce que**
la liaison rotative entre le volant (4) et la tige (3) est une liaison dentée (23).

19. Soupape manuelle (1) selon l'une quelconque des revendications 2 à 18,
**caractérisée en ce que**
l'élément d'actionnement (8) est vissé à la tige (3) au moyen d'une vis de blocage (24).

20. Soupape manuelle (1) selon la revendication 19,
**caractérisée en ce que**
au moins un joint (22) est agencé entre la vis de blocage (24) et l'élément d'actionnement (8).
